(19) Europäisches Patentamt
European Patent Office
Office européen des brevets

(11) EP 4 645 148 A1

(12) EUROPEAN PATENT APPLICATION

(43) Date of publication:
05.11.2025 Bulletin 2025/45

(21) Application number: 25170675.0

(22) Date of filing: 15.04.2025

(51) International Patent Classification (IPC):
G06F 30/10 (2020.01)    B22F 10/80 (2021.01)
B22F 10/85 (2021.01)    B29C 64/386 (2017.01)
B33Y 50/00 (2015.01)    B33Y 50/02 (2015.01)
G06F 30/20 (2020.01)    G06T 19/20 (2011.01)
G06F 113/10 (2020.01)    G06F 119/18 (2020.01)

(52) Cooperative Patent Classification (CPC):
G06F 30/20; B22F 10/80; B22F 10/85;
B29C 64/386; B33Y 50/00; G06F 30/10;
G06T 19/20; G06F 2113/10; G06F 2119/18

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 30.04.2024 US 202418650769

(71) Applicant: General Electric Company
Cincinnati, Ohio 45215 (US)

(72) Inventors:
• MUKUNDAN, Bathrinarayanan
Evendale, 45215 (US)
• YANG, Pinghai
Evendale, 45215 (US)
• SUMNER, Johanna
Evendale, 45215 (US)

(74) Representative: Hafner & Kohl PartmbB
Schleiermacherstraße 25
90491 Nürnberg (DE)

(54) **BUILD LINE PREDICTION SYSTEMS AND METHODS FOR ADDITIVE MANUFACTURED PARTS**

(57) A method for predicting build line locations in a part before additively manufacturing the part, includes obtaining a sliced three-dimensional model 130 of a part for additive manufacturing, generating, for each neighboring pair of layers 381, 382, 481, 482 in the plurality of layers 280, a face count difference, generating, for each of the neighboring pair of layers, a surface area difference, predicting, for each of the neighboring pair of layers, that the first layer from each of the neighboring pair of layers comprises a presence of a build line based on a determination that the face count difference is less than zero and the surface area difference is greater than zero; storing a list of predicted build line layers comprising the one or more layers predicted to comprise the presence of the build line; and adjusting dimensions of the part for additive manufacturing corresponding to a layer in the list of predicted build line layers.

FIG. 1

## Description

### *TECHNICAL FIELD*

The present specification generally relates to systems, methods, and computer-program products for generating in-plane offsets for additive manufacturing.

### *BACKGROUND*

Additive manufacturing (AM) processes are used to fabricate precision three-dimensional components from a digital model. Such components are fabricated using additive processes where successive layers of material are consolidated one on top of the other on a build plate in an additive manufacturing machine (AMM). Additive manufacturing processes include powder bed fusion, binder jet, direct energy deposition, material extrusion, material jetting, sheet lamination, and vat polymerization.

Digital models manufactured via additive processes are subjected to thermal, mechanical, and/or printer effects that cause the manufactured component to have different geometry than the nominal geometry of the digital model. That is, build lines, deformations, cracks, and the like may manifest in the manufactured component. There is a continuous desire to mitigate and eliminate negative effects produced during additive manufacturing a component.

### BRIEF DESCRIPTION OF THE DRAWINGS

The embodiments set forth in the drawings are illustrative and exemplary in nature and are not intended to limit the disclosure. The following detailed description of the illustrative embodiments can be understood when read in conjunction with the following drawings, where like structure is indicated with like reference numerals.

FIG. 1 depicts an illustrative block diagram of the build line prediction process.

FIG. 2A depicts an illustrative three-dimensional (3D) model and a corresponding illustrative sliced model generated by the slicer module.

FIG. 3 depicts an illustrative cross-section of the 3D model and a pair of layers being analyzed by the build line prediction process.

FIG. 4 depicts an illustrative cross-section of the 3D model and another pair of layers being analyzed by the build line prediction process.

FIG. 5 depicts an illustrative example of ray-shooting analysis for predicting the location of the predict build line with the predicted layer of the 3D model.

FIG. 6 depicts an example method for predicting build lines in a 3D model of a part for additive manufacturing.

FIG. 7 depicts an example apparatus configured to perform the build line prediction process as described herein.

## DETAILED DESCRIPTION

Aspects of the present disclosure are directed to techniques for predicting occurrences and location of build lines based on a model of a component for additive manufacturing. Build lines are one of many types of additive manufacturing deformations that can manifest in additive manufactured components. Current processes for determining whether build lines will form as a result of additive manufacturing and more specifically, where build lines occur, includes manufacturing test components and observing results of that manufacture (e.g., have build lines formed in the test components). Current processes are expensive, time-consuming, and prone to error. Accordingly, aspects described herein provide technical solutions for predicting the presence of build line and in some aspects build line locations. The technical solutions provide several technical benefits to improving additive manufacturing of components. Such technical benefits include reducing or eliminating the need to prototype components to determine the presence of build lines and the location of the same. Additionally, technical benefits also include providing a tool capable of predicting the location of a build line that can provide guidance to a compensation tool for adjusting build parameters or even design features of a component for additive manufacturing. The build line tools described herein provide an effective and efficient mechanism to evaluate design changes for removing the build line(s). In the event build lines cannot be designed out by adjusting a design of a component, the build line tools described herein provide guidance for simulation and measurement-based compensation tools to refine compensation parameters in areas of build lines to get a more accurate compensation, for example, by adjusting tool paths, energy for curing and forming the component, and similar build parameters.

References will now be made in detail to the embodiments of the disclosure, examples of which are illustrated in the accompanying drawings. Whenever possible, like reference numbers will be used to refer to like components or parts.

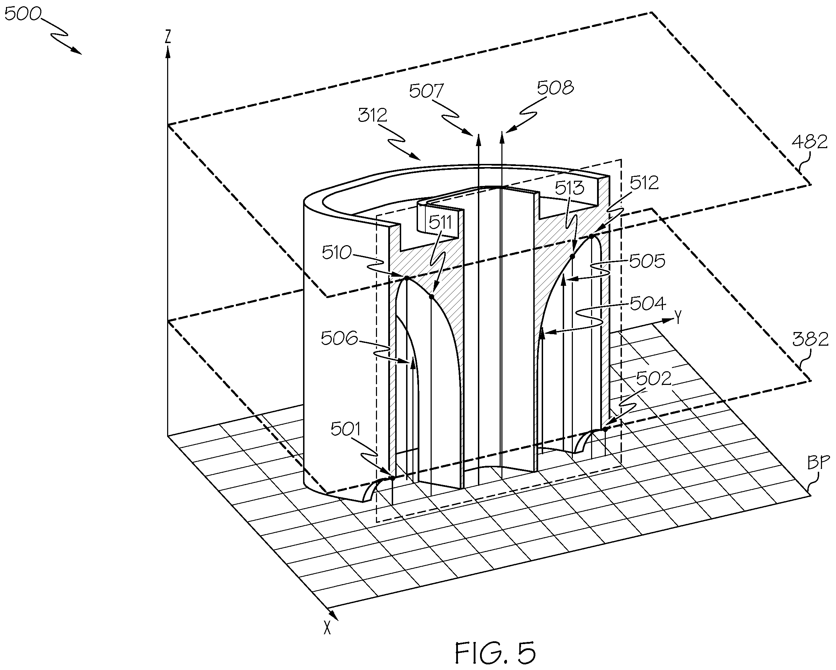

Additive manufacturing machines (AMMs) or additive manufacturing apparatuses (AMAs) include rapid-prototyping, rapid manufacturing device, or additive manufacturing devices such as a binder jet additive manufacturing, fused filament fabrication (FFF), fused deposition modeling (FDM), stereolithography (SLA), digital light processing (DLP), selective laser sintering (SLS), selective laser melting (SLM), laminated object manufacturing (LOM), electron beam melting (EBM), and/or the like. In general, AMMs include a build plane (BP, FIG. 5) where a layer of working material is deposited and an energy source such as a laser, heat source, ultraviolet (UV) light, or other type of directed energy source is applied to the working material to cause bonding or transformation of the working material into a rigid material. The process is repeated by adding layer upon layer of working material onto the previous layer in a build direction (Z-axis, FIG. 5) that is typically perpendicular to the build plane BP. However, this is merely a general example of an additive manufacturing process as there are many different combinations of working materials, binders, and/or energy sources that are used to additively manufacture a component.

Various aspects of the systems, methods, and computer program products for predicting build line presence and location in a computer-modeled part before additively manufacturing the part are shown and described herein. Like numbers refer to like structures in the drawings.

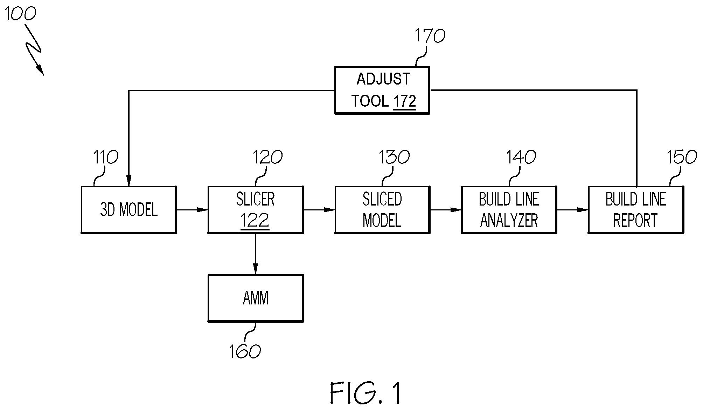

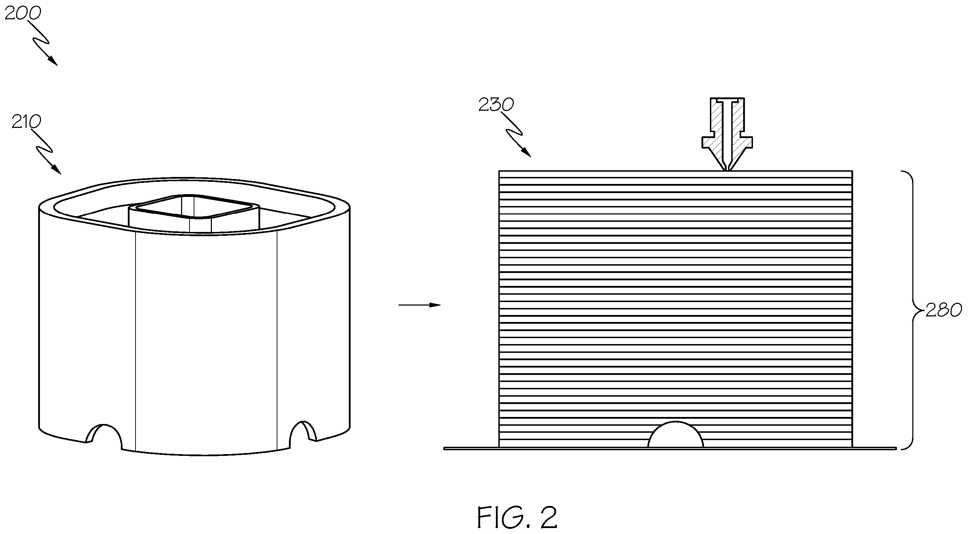

FIG. 1 depicts an illustrative block diagram of the build line prediction process. The build line prediction process is described with reference to the illustrative three-dimensional (3D) model, sliced model, and annotated layers depicted in FIGS. 2-5. The build line prediction process obtains a 3D model (e.g., 3D model 210, FIG. 2) at block 110. The 3D model is prepared for additive manufacturing. Preparation of the additive manufacturing may include invoking a slicer module 122 at block 120.

AMMs operate based on a set of additive manufacturing machine control commands that are typically generated by a slicing tool. The slicer module 122 receives a 3D model of a component, for example, as a stereolithography (STL) file and/or other 3D model file, and applies a slicing algorithm that partitions the 3D model of the component into a plurality of build layers having a predefined thickness depending on the geometries of the component and the AMM that will manufacture the component. The slicer module 122 generates a sliced model 130 (e.g., sliced model 230) at block 120. The sliced model 230 includes a plurality of layers 280 stacked in a build direction. Each layer of the plurality of layers 280 has a thickness, a depth, and a width defining a plane parallel with a build plane BP (FIG. 5). Additionally, in some aspects, the slicer module 122, at block 120, generates a set of additive manufacturing machine control commands, for example, embodied as a g-code file that defines a series of commands and associated values for the various components of the AMM to operate and manufacture the component.

The build line prediction process implements a build line analyzer module 140, which is described in detail with reference to FIGS. 2-7. The build line analyzer module 140 may be a pairwise layer analysis process. Pairwise refers to analyzing a pair of neighboring (also referred to as adjacent) layers of the plurality of layers that make up the sliced model. The build line analyzer module includes interrogating slice geometry of the layers for areas at risk of forming a build line based on a change in the number of faces and a scanned area between pairwise layers. Aspects of the build line analyzer module may further include ray-shooting analysis to determine the location and feature of a component that causes the build line. The build line analyzer module may also include determining a relative intensity value of the predicted build line.

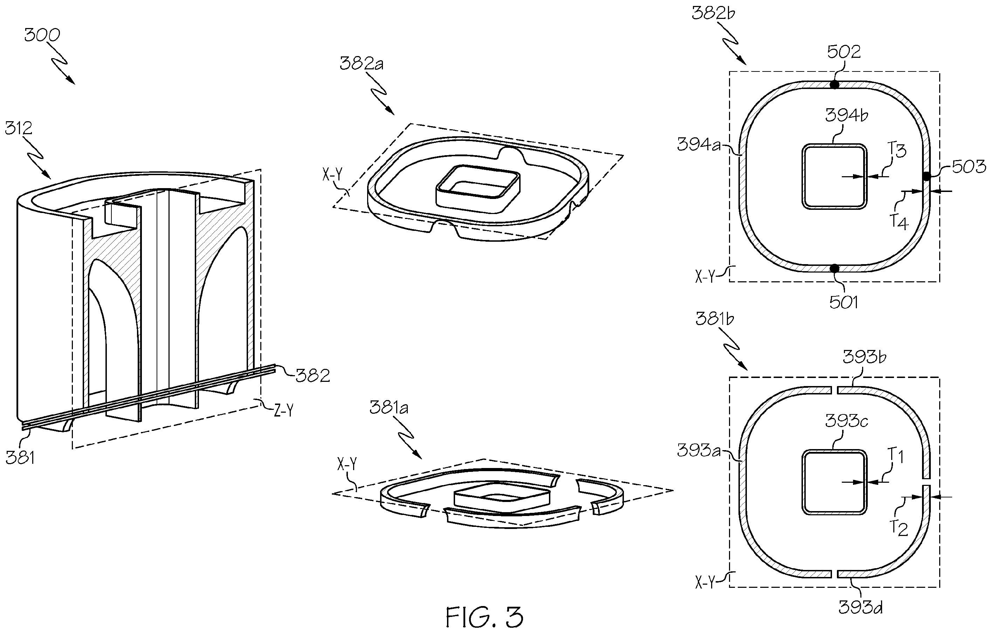

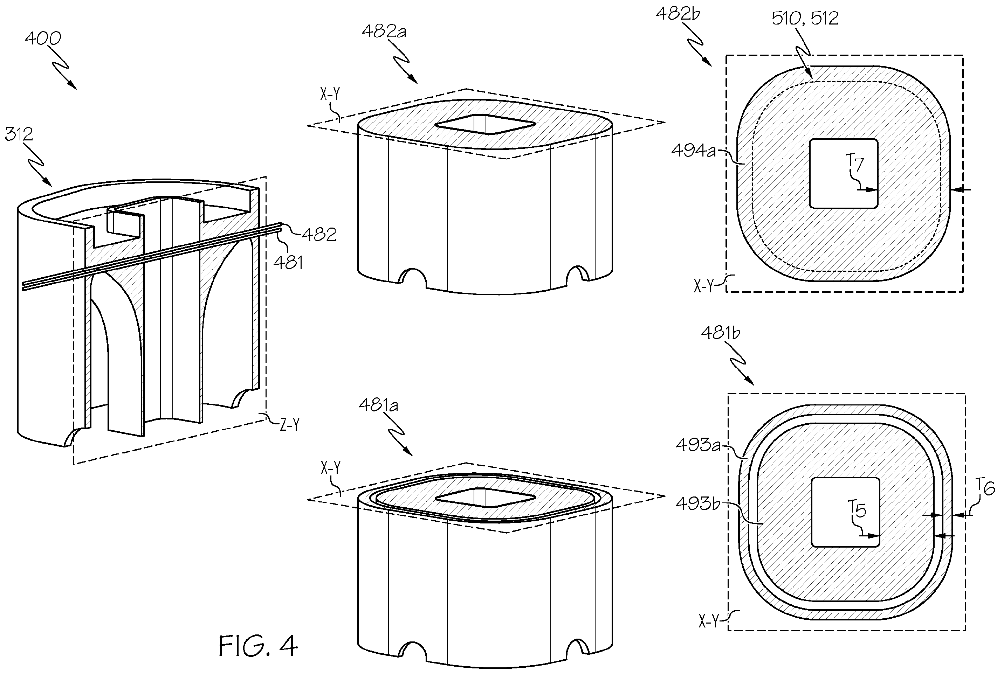

FIG. 2 depicts an illustrative 3D model 210 and a corresponding illustrative sliced model 230 generated by the slicer module 122. The sliced model 230 includes a plurality of sliced layers 280. FIGS. 3 and 4 each depict a separate pair of neighboring layers analyzed by the build line analyzer module 140. In FIG. 3, a cross-section 312 of the 3D model 310 is depicted. The cross-section depicts a Z-Y slice of the 3D model 310. A first layer 381 and a second layer 382 include a neighboring pair of layers being interrogated by the build line analyzer module 140. A 3D model 381a depicting the first layer 381 and a 3D model 382a illustrating the second layer 382 are shown for context. The build line analyzer module 140 interrogates a surface 381b of the first layer 381 and a surface 382b of the second layer 382.

For example, the interrogation by the build line analyzer module 140 includes determining a face count for each layer of the pair of neighboring layers. A face refers to a closed loop shape. The process for determining faces and subsequently counting the total number of faces may include tracing perimeters of the features present on the X-Y plane defining the surface 381b and surface 382b. For each instance that a perimeter trace intersects, a closed loop shape is identified. For example, the surface 381b of the first layer 381 includes four faces: a first face 393a, a second face 393b, a third face 393c, and a fourth face 393d. Similarly, the surface 382b of the second layer 382 includes two faces: a first face 394a and a second face 394b.

The interrogation of the build line analyzer module 140 also includes determining a surface area for each layer of the pair of neighboring layers. The surface area is a sum of the surface area of each face with respect to the X-Y plane for each layer of the pair of neighboring layers. For example, the surface area for the first layer 381 is the sum of the individual surface areas of the four faces: the first face 393a, the second face 393b, the third face 393c, and the fourth face 393d. For the second layer 382, the surface area is the sum of the individual surface areas of the two faces: the first face 394a and the second face 394b. In the present example, the surface area of the first layer 381 is less than the surface area of the second layer 382.

After the build line analyzer module 140 interrogates the first layer 381 and the second layer 382, the build line analyzer module 140 predicts whether a build line will be present in the top layer of the pair of neighboring layers being interrogated. The prediction process includes comparing the face count of each layer of the pair of neighboring layers and the surface area of each layer of the pair of neighboring layers. A build line is predicted in the second layer 382 (e.g., the top layer of the of the pair of neighboring layers being interrogated) when the difference ($\Delta F$) in the face count between the second layer 382 ($n^{th}$ layer) and the first layer 381 (n-1 layer) is less than a predetermined face count value and the difference ($\Delta S$) in the surface area between the second layer 382 and the first layer 381 is greater than a predetermined surface area value. For example, the predetermined face count value (FCV) may be 0, 1, 2, 3, 4, or another predefined value. The predetermined surface area value (SAV) may be 0, 1, 2, 3, 4, or another predefined value. Accordingly, the build line may be predicted for the $n^{th}$ layer when $\Delta F < FCV$ and $\Delta S > SAV$, where

$$\Delta F = n^{th}_{faceCount} - n^{th} - 1_{faceCount}$$ and

$$\Delta S = n^{th}_{surfaceArea} - n^{th} - 1_{surfaceArea}.$$

In the example depicted in **FIG. 3,** the build line analyzer module 140 determines that the difference in the face count is less than zero and the difference in the surface area is greater than 0. When the predetermined values are 0, the build line analyzer module 140 predicts a build line may be present in the second layer 382 ($n^{th}$ layer).

The build line analyzer module 140 continues to interrogate each pair of layers throughout the sliced model 230. FIG. 4 again depicts the cross-section 312 of the 3D model 310. The cross-section depicts a Z-Y slice of the 3D model 310. A first layer 481 and a second layer 482 include a neighboring pair of layers being interrogated by the build line analyzer module 140. A 3D model 481a illustrating the first layer 481 and a 3D model 482a illustrating the second layer 482 are shown for context. The build line analyzer module 140 interrogates a surface 481b of the first layer 481 and a surface 482b of the second layer 482.

The interrogation of the build line analyzer module 140 includes determining a face count for each layer of the pair of neighboring layers. For example, the surface 481b of the first layer 481 includes two faces: a first face 493a and a second face 493b. Similarly, the surface 482b of the second layer 482 includes one face: a first face 494a.

The interrogation of the build line analyzer module 140 then determines the surface area for each layer of the pair of neighboring layers. The surface area is the sum of the surface area of each face with respect to the X-Y plane for each layer of the pair of neighboring layers. For example, the surface area for the first layer 481 is the sum of the individual surface areas of the two faces: the first face 493a and the second face 493b. For the second layer 482, the surface area is the surface area of the first face 494a. In the present example, the surface area of the first layer 481 is less than the surface area of the second layer 482.

In the example depicted in **FIG. 4,** the build line analyzer module 140 determines that the difference in the face count is less than zero and the difference in the surface area is greater than 0. When the predetermined values are 0, the build line analyzer module 140 predicts a build line may be present in the second layer 482 ($n^{th}$ layer).

The build line analyzer module 140 may further include a process for predicting the location of the build line within the predicted layer of the 3D model. The process for predicting the location utilizes ray-shooting analysis. **FIG. 5** depicts an illustrative example of ray-shooting analysis for predicting the location of the predict build line with the predicted layer of the 3D model.

**FIG. 5** depicts the cross-section 312 of the 3D model 310 on a virtual build plate (BP). Ray-shooting analysis includes projecting an array of rays extending in a perpendicular direction from the virtual build plate upward to the slice 3D model. **FIG. 5** depicts a plurality of illustrative rays extending from build plate. Rays of the plurality of rays having a solid circles indicate intersection with the 3D model (e.g., rays 501, 502, 503 (FIG. 3), 510, 511, 512, and 513), while rays with arrows (e.g., rays 504, 505, 506, 507, and 508) indicate no intersection with the 3D model or at least no intersection as depicted within **FIG. 5.** It should be understood that the many more rays than the few example rays depicted in **FIG. 5** may be projected for with the ray-shooting analysis.

In **FIG. 5,** rays 501 and 502 intersect the second layer 382 that was predicted as having a build line by the build line analysis module 104. Similarly, rays 510 and 512 intersect the second layer 482 that was predicted as having a build line by the build line analysis module 104. Referring to **FIGS. 3** and **4,** where the rays intersect the layer that is predicted to have a build line, the intersection locations provide a more accurate predicted location and indication as to the feature that will have a build line. For example, in **FIG. 3,** the illustration of the surface 382b of the second layer 382 depicts the intersection of rays 501, 502, and 503. These locations are the likely locations within the layer where the build line will occur. The locations can be quantified by the X, Y, and Z position of the 3D model. For example, in **FIG. 4,** the illustration of the surface 482b of the second layer 482 depicts the intersection of rays 510, 512, and other rays not shown, but depicted by the dotted ring illustrated on the surface 482b. Again, these locations are the likely locations within the layer where the build line will occur.

The build line analyzer module 140 may further determine a relative intensity of the build line. The relative intensity of the build line may be based on the minimum wall thickness of a wall within the pair of neighboring layers being interrogated and the difference ($\Delta S$) in the surface area between the $n^{th}$ layer and the n-1 layer (e.g., the second layer 382 and the first layer 381 in **FIG. 3,** and the second layer 482 and the first layer 481 in **FIG. 4).** For example, the build line analyzer module 140 may determine the minimum wall thickness for each of the faces within a layer and then determine which of the set has the minimum thickness value. For example, as depicted in **FIG. 3,** the build line analyzer module 140 may the following portions ($T_1$, $T_2$, $T_3$, $T_4$) as having a minimum wall thickness for each corresponding face. The minimum wall thickness of the set may then be determined to be the portion ($T_3$) corresponding for the second face 394b.

The relative intensity ($RI$) for the predicted build line ($BL$) in the second layer 382 is determined by the following function $RI_{BL} = \Delta S/W_{T_i}$, where $T_i = T_3$.

For example, the build line analyzer module 140 may determine the minimum wall thickness for each of the faces within a layer and then determine which of the set has the minimum thickness value. For example, as depicted in **FIG. 4,** the build line analyzer module 140 may the following portions ($T_5$, $T_6$, $T_7$) as having a minimum wall thickness for each corresponding face. The minimum wall thickness of the set may then be determined to be the portion ($T_5$) corresponding for the second face 493b. The relative intensity ($RI$) for the predicted build line ($BL$) in the second layer 482 is determined by the following function $RI_{BL} = \Delta S/W_{T_i}$, where $T_i = T_5$.

Referring back to **FIG. 1,** the build line prediction process outputs the predictions made by the build line analyzer module 140 as a build line report at block 150. The build line report may include the predicted layer of a build line, a coordinate location of the build line within the context of the 3D model (e.g., X, Y, Z), where Z indicates a height value from the base of the 3D model or the build plate, and/or a relative intensity of the build line. The build line report may be provided to a computer aided drafting program, for example, at block 110 or 170, where the information in the build line report is utilized to adjust the 3D model, revise tool paths, or the like to reduce or eliminate the predicted one or more build lines. For example, at bock 170, a computer aided drafting program or similar design program may implement an adjustment tool module 172. The adjustment tool module 172 may include automatic or manual design tools and/or automatic or manual compensation tools. The automatic or manual design tools and/or automatic or manual compensation tools may be configured to receive the build line report from block 150 and automatically make adjustments to the 3D model that change design parameters such as dimensions of a component, orientation of a component (e.g., tilt or rotation with respect to the build plate), a tool path, or the like. For example, the adjustment may change a face count change per layer and/or a surface area of a layer, such as the predicted layer of a build line or one or more adjacent layers for a corresponding 3D model.

Once the 3D model is designed with reduced or no predicted chance for build lines, the 3D model may be processed for manufacturing at block 120 and then loaded into an AMM at block 160 for manufacturing.

*Example Methods for Predicting Build Line Locations in a Part for AM*

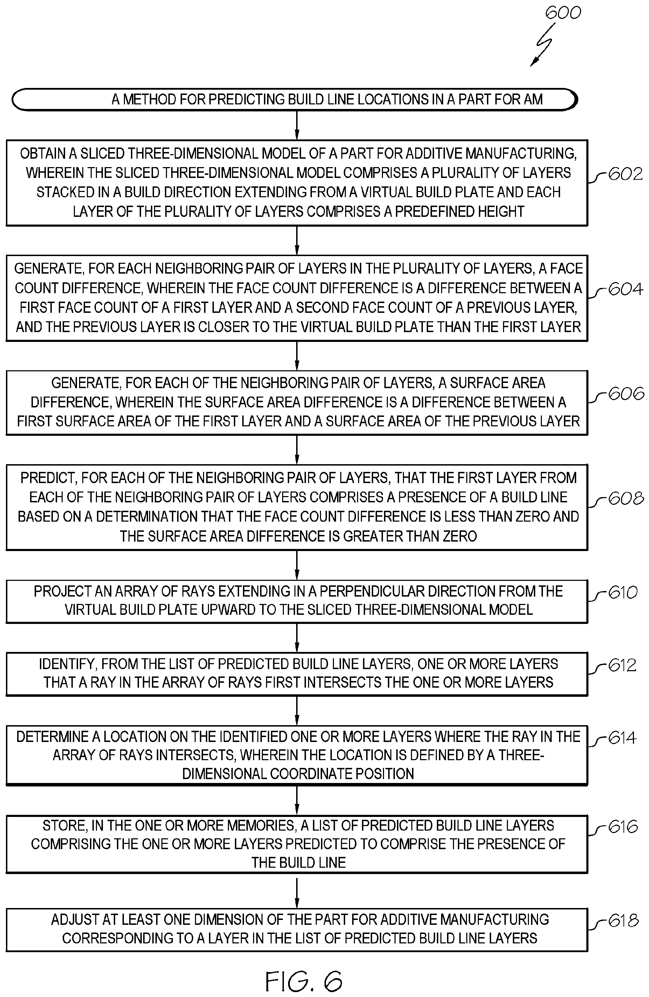

**FIG. 6** depicts an example method for predicting build lines in a 3D model of a part for additive manufacturing.

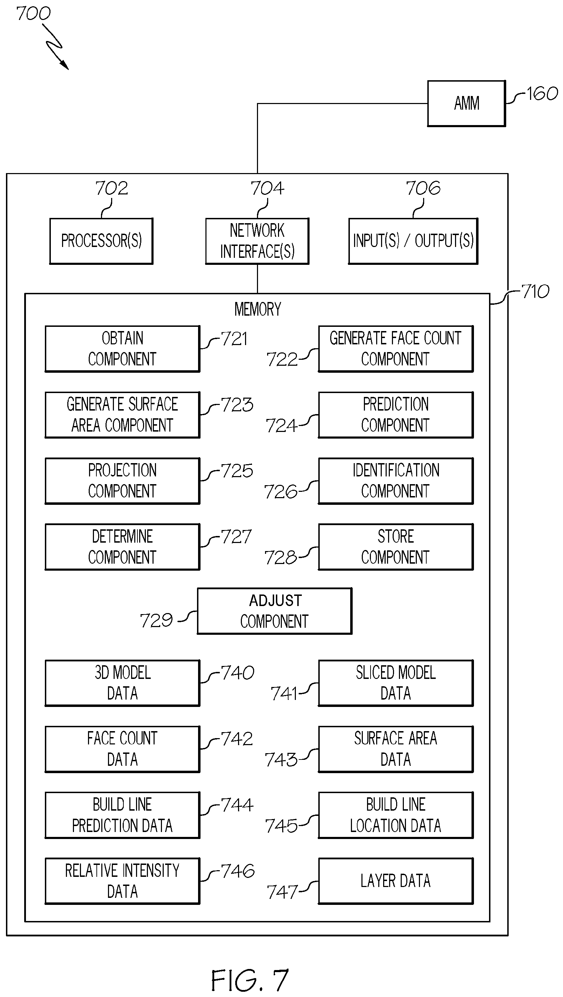

In this example, method 600 begins at step 602 with obtaining a sliced three-dimensional model of a part for additive manufacturing, wherein the sliced three-dimensional model comprises a plurality of layers stacked in a build direction extending from a virtual build plate and each layer of the plurality of layers comprises a predefined height. For example, step 602 may be performed by the apparatus 700 as described above with reference to **FIG. 7.**

Method 600 then proceeds to step 604 with generating, for each neighboring pair of layers in the plurality of layers, a face count difference, wherein the face count difference is a difference between a first face count of a first layer and a second face count of a previous layer, and the previous layer is closer to the virtual build plate than the first layer. For example, step 604 may be performed by the apparatus 700 as described above with reference to **FIG. 7.**

Method 600 then proceeds to step 606 with generating, for each of the neighboring pair of layers, a surface area difference, wherein the surface area difference is a difference between a first surface area of the first layer and a surface area of the previous layer. For example, step 606 may be performed by the apparatus 700 as described above with reference to **FIG. 7.**

Method 600 then proceeds to step 608 with predicting, for each of the neighboring pair of layers, that the first layer from each of the neighboring pair of layers comprises a presence of a build line based on a determination that the face count difference is less than zero and the surface area difference is greater than zero. For example, step 608 may be performed by the apparatus 700 as described above with reference to **FIG. 7.**

Method 600 then proceeds to step 610 with projecting an array of rays extending in a perpendicular direction from the virtual build plate upward to the sliced three-dimensional model. For example, step 610 may be performed by the apparatus 700 as described above with reference to **FIG. 7.**

Method 600 then proceeds to step 612 with identifying, from the list of predicted build line layers, one or more layers that a ray in the array of rays first intersects the one or more layers. For example, step 612 may be performed by the apparatus 700 as described above with reference to **FIG. 7.**

Method 600 then proceeds to step 614 with determining a location on the identified one or more layers where the ray in the array of rays intersects, wherein the location is defined by a three-dimensional coordinate position. For example, step 614 may be performed by the apparatus 700 as described above with reference to **FIG. 7.**

Method 600 then proceeds to step 616 with storing, in the one or more memories, a list of predicted build line layers comprising the one or more layers predicted to comprise the presence of the build line. For example, step 616 may be performed by the apparatus 700 as described above with reference to **FIG. 7.**

Method 600 the proceeds to step 618 with adjusting at least one dimension of the part for additive manufacturing corresponding to a layer in the list of predicted build line layers. For example, step 618 may be performed by the apparatus 700 as described above with reference to **FIG. 7.** Step 618 may employ an adjustment tool module 172 as described herein or another module configured to receive the build line report and automatically make adjustments to the 3D model that change design parameters such as dimensions of a component, a tool path, or the like. For example, the adjustment may change a face count change per layer and/or a surface area of a layer, such as the predicted layer of a build line or one or more adjacent layers for a corresponding 3D model.

In some aspects, the method further includes determining, for each layer in the list of predicted build line layers, a portion with a minimum wall thickness, and determining a thickness value for the portion with the minimum wall thickness.

In some aspects, the method further includes determining, for each layer in the list of predicted build line layers, a relative intensity based on a ratio of the surface area and the thickness value.

In some aspects, the method of obtaining the sliced three-dimensional model comprises to receiving a three-dimensional model of the part for additive manufacturing, and slicing the three-dimensional model into the plurality of layers along an additive manufacturing build direction.

In some aspects, the method further includes determining a face count for each layer of the plurality of layers, wherein the face count is a number of faces defined by a closed loop shape with the layer of the plurality of layers.

In some aspects, the list of predicted build line layers stored in the one or more memories is defined by a height value.

*Example Apparatus for Predicting Build Lines*

**FIG. 7** depicts an example apparatus 700 configured to perform the methods described herein.

Apparatus 700 includes one or more processors 702. Generally, processor(s) 702 may be configured to execute computer-executable instructions (e.g., software code) to perform various functions, as described herein.

Apparatus 700 further includes a network interface(s) 704, which generally provides data access to any sort of data network, including personal area networks (PANs), local area networks (LANs), wide area networks (WANs), the Internet, and the like.

Apparatus 700 further includes input(s) and output(s) 706, which generally provide means for providing data to and from apparatus 700, such as via connection to computing device peripherals, including user interface peripherals.

Apparatus 700 further includes a memory 710 configured to store various types of components and data.

In this example, memory 710 includes an obtain component 721, a generate face count component 722, a generate surface area component 723, a prediction component 724, a projection component 725, an identification component 726, a determine component 727, a store component 728, and an adjust component 729.

The obtain component 721 is configured to perform step 602 of the method 600 depicted and described with reference to **FIG. 6.**

The generate face count component 722 is configured to perform step 604 of the method 600 depicted and described with reference to **FIG. 6.**

The generate surface area component 723 is configured to perform step 606 of the method 600 depicted and described with reference to **FIG. 6.**

The prediction component 724 is configured to perform step 608 of the method 600 depicted and described with reference to **FIG. 6.**

The projection component 725 is configured to perform step 610 of the method 600 depicted and described with reference to **FIG. 6.**

The identification component 726 is configured to perform step 612 of the method 600 depicted and described with reference to **FIG. 6.**

The determine component 727 is configured to perform step 614 of the method 600 depicted and described with reference to **FIG. 6.**

The store component 728 is configured to perform step 616 of the method 600 depicted and described with reference to **FIG. 6.**

The adjust component 729 is configured to perform step 618 of the method 600 depicted and described with reference to **FIG. 6.**

In this example, memory 710 also includes 3D model data 740, sliced model data 741, face count data 742, surface area data 743, build line prediction data 744, build line location data 745, relative intensity data 746, and layer data 747 as described herein.

Apparatus 700 may be implemented in various ways. For example, apparatus 700 may be implemented within on-site, remote, or cloud-based processing equipment.

Apparatus 700 is just one example, and other configurations are possible. For example, in alternative embodiments, aspects described with respect to apparatus 700 may be omitted, added, or substituted for alternative aspects.

Aspects described herein provide technical solutions to the technical problems associated with addressing build lines from additive manufacturing. In particular, determining build line locations is currently a manual and time consuming process that involved building prototypes and making manual observations for build lines. However, methods described herein and systems that are configured to implement the methods described herein provide technical solutions for predicting the presence of build line and build line locations. Accordingly, aspects described herein provide technical benefits that include reducing or eliminating the need to prototype components to determine the presence of build lines and the location of the same. Additionally, technical benefits also include providing a tool capable of predicting the location of a build line that can provide guidance to a compensation tool for adjusting build parameters or even design features of a component for additive manufacturing. The build line tools described herein provide an effective and efficient mechanism to evaluate design changes for removing the build line(s). In the event build lines cannot be designed out by adjusting a design of a component, the build line tools described herein provide guidance for simulation and measurement-based compensation tools to refine compensation parameters in areas of build lines to get a more accurate compensation, for example, by adjusting tool paths, energy for curing and forming the component, and similar build parameters.

While particular embodiments have been illustrated and described herein, it should be understood that various other changes and modifications may be made without departing from the spirit and scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

*Example Clauses*

Implementation examples are described in the following numbered clauses:

Clause 1: An apparatus configured to predict build line locations in a part before additively manufacturing the part, comprising: one or more memories; and one or more processors, coupled to the one or more memories, configured to cause the apparatus to: obtain a sliced three-dimensional model of a part for additive manufacturing, wherein the sliced three-dimensional model comprises a plurality of layers stacked in a build direction extending from a virtual build plate and each layer of the plurality of layers comprises a predefined height; generate, for each neighboring pair of layers in the plurality of layers, a face count difference, wherein the face count difference is a difference between a first face count of a first layer and a second face count of a previous layer, and the previous layer is closer to the virtual build plate than the first layer; generate, for each of the neighboring pair of layers, a surface area difference, wherein the surface area difference is a difference between a first surface area of the first layer and a surface area of the previous layer; predict, for each of the neighboring pair of layers, that the first layer from each of the neighboring pair of layers comprises a presence of a build line based on a determination that the face count difference is less than zero and the surface area difference is greater than zero; and store, in the one or more memories, a list of predicted build line layers comprising the one or more layers predicted to comprise the presence of the build line.

Clause 2: The apparatus of Clause 1, wherein the one or more processors are configured to further cause the apparatus to: project an array of rays extending in a perpendicular direction from the virtual build plate upward to the sliced three-dimensional model; identify, from the list of predicted build line layers, one or more layers that a ray in the array of rays first intersects the one or more layers; and determine a location on the identified one or more layers where the ray in the array of rays intersects, wherein the location is defined by a three-dimensional coordinate position.

Clause 3: The apparatus of Clause 2, wherein the one or more processors are configured to further cause the apparatus to: determine, for each layer in the list of predicted build line layers, a portion with a minimum wall thickness; and determine a thickness value for the portion with the minimum wall thickness.

Clause 4: The apparatus of Clause 3, wherein the one or more processors are configured to further cause the apparatus to determine, for each layer in the list of predicted build line layers, a relative intensity based on a ratio of the surface area and the thickness value.

Clause 5: The apparatus of any one of Clauses 1-4, wherein to obtain the sliced three-dimensional model comprises to: receive a three-dimensional model of the part for additive manufacturing; and slice the three-dimensional model into the plurality of layers along an additive manufacturing build direction.

Clause 6: The apparatus of any one of Clauses 1-5, wherein the one or more processors are configured to further cause the apparatus to determine a face count for each layer of the plurality of layers, wherein the face count is a number of faces defined by a closed loop shape with the layer of the plurality of layers.

Clause 7: The apparatus of any one of Clauses 1-6, wherein the list of predicted build line layers stored in the one or more memories is defined by a height value.

Clause 8: A method for predicting build line locations in a part before additively manufacturing the part, comprising: obtaining a sliced three-dimensional model of a part for additive manufacturing, wherein the sliced three-dimensional model comprises a plurality of layers stacked in a build direction extending from a virtual build plate and each layer of the plurality of layers comprises a predefined height; generating, for each neighboring pair of layers in the plurality of layers, a face count difference, wherein the face count difference is a difference between a first face count of a first layer and a second face count of a previous layer, and the previous layer is closer to the virtual build plate than the first layer; generating, for each of the neighboring pair of layers, a surface area difference, wherein the surface area difference is a difference between a first surface area of the first layer and a surface area of the previous layer; predicting, for each of the neighboring pair of layers, that the first layer from each of the neighboring pair of layers comprises a presence of a build line based on a determination that the face count difference is less than zero and the surface area difference is greater than zero; and storing, in one or more memories, a list of predicted build line layers comprising the one or more layers predicted to comprise the presence of the build line.

Clause 9: The method of Clause 8, further comprising: projecting an array of rays extending in a perpendicular direction from the virtual build plate upward to the sliced three-dimensional model; identifying, from the list of predicted build line layers, one or more layers that a ray in the array of rays first intersects the one or more layers; and determining a location on the identified one or more layers where the ray in the array of rays intersects, wherein the location is defined by a three-dimensional coordinate position.

Clause 10: The method of Clause 9, further comprising: determining, for each layer in the list of predicted build line layers, a portion with a minimum wall thickness; and determining a thickness value for the portion with the minimum wall thickness.

Clause 11: The method of Clause 10, further comprising determining, for each layer in the list of predicted build line layers, a relative intensity based on a ratio of the surface area and the thickness value.

Clause 12: The method of any one of Clauses 8-11, wherein obtaining the sliced three-dimensional model comprises: receiving a three-dimensional model of the part for additive manufacturing; and slicing the three-dimensional model into the plurality of layers along an additive manufacturing build direction.

Clause 13: The method of any one of Clauses 8-12, further comprising determining a face count for each layer of the plurality of layers, wherein the face count is a number of faces defined by a closed loop shape with the layer of the plurality of layers.

Clause 14: The method of any one of Clauses 8-13, wherein the list of predicted build line layers stored in the one or more memories is defined by a height value.

Clause 15: A computer program product comprising one or more memories storing instructions, that when executed by one or more processors, cause the one or more processors to perform a method comprising: obtaining a sliced three-dimensional model of a part for additive manufacturing, wherein the sliced three-dimensional model comprises a plurality of layers stacked in a build direction extending from a virtual build plate and each layer of the plurality of layers comprises a predefined height; generating, for each neighboring pair of layers in the plurality of layers, a face count difference, wherein the face count difference is a difference between a first face count of a first layer and a second face count of a previous layer, and the previous layer is closer to the virtual build plate than the first layer; generating, for each of the neighboring pair of layers, a surface area difference, wherein the surface area difference is a difference between a first surface area of the first layer and a surface area of the previous layer; predicting, for each of the neighboring pair of layers, that the first layer from each of the neighboring pair of layers comprises a presence of a build line based on a determination that the face count difference is less than zero and the surface area difference is greater than zero; and storing, in one or more memories, a list of predicted build line layers comprising the one or more layers predicted to comprise the presence of the build line.

Clause 16: The computer program product of Clause 15, wherein the instructions, that when executed by one or more processors, further cause the one or more processors to perform: projecting an array of rays extending in a perpendicular direction from the virtual build plate upward to the sliced three-dimensional model; identifying, from the list of predicted build line layers, one or more layers that a ray in the array of rays first intersects the one or more layers; and determining a location on the identified one or more layers where the ray in the array of rays intersects, wherein the location is defined by a three-dimensional coordinate position.

Clause 17: The computer program product of Clause 16, wherein the instructions, that when executed by one or more processors, further cause the one or more processors to perform: determining, for each layer in the list of predicted build line layers, a portion with a minimum wall thickness; and determining a thickness value for the portion with the minimum wall thickness.

Clause 18: The computer program product of Clause 17, wherein the instructions, that when executed by one or more processors, further cause the one or more processors to perform determining, for each layer in the list of predicted build line layers, a relative intensity based on a ratio of the surface area and the thickness value.

Clause 19: The computer program product of any one of Clauses 15-18, wherein obtaining the sliced three-dimensional model comprises: receiving a three-dimensional model of the part for additive manufacturing; and slicing the three-dimensional model into the plurality of layers along an additive manufacturing build direction.

Clause 20: The computer program product of any one of Clauses 15-19, wherein the instructions, that when executed by one or more processors, further cause the one or more processors to perform determining a face count for each layer of the plurality of layers, wherein the face count is a number of faces defined by a closed loop shape with the layer of the plurality of layers.

Clause 21: A processing system, comprising: a memory comprising computer-executable instructions; and a processor configured to execute the computer-executable instructions and cause the processing system to perform a method in accordance with any one of Clauses 1-20.

Clause 22: A processing system, comprising means for performing a method in accordance with any one of Clauses 1-20.

Clause 23: A non-transitory computer-readable medium comprising computer-executable instructions that, when executed by a processor of a processing system, cause the processing system to perform a method in accordance with any one of Clauses 1-20.

*Additional Considerations*

The terminology used herein is for the purpose of describing particular aspects only and is not intended to be limiting. As used herein, the singular forms "a," "an," and "the" are intended to include the plural forms, including "at least one," unless the content clearly indicates otherwise. "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof. The term "or a combination thereof" means a combination including at least one of the foregoing elements.

It will be apparent to those skilled in the art that various modifications and variations can be made in the present disclosure without departing from the spirit or scope of the disclosure. Thus, it is intended that the present disclosure cover the modifications and variations of this disclosure provided they come within the scope of the appended claims and their equivalents.

While various aspects of the present disclosure have been described above, it should be understood that they have been presented by way of example only, and not limitation. It will be apparent to persons skilled in the relevant art that various changes in form and detail can be made therein without departing from the spirit and scope of the present disclosure. Thus, the breadth and scope of the present disclosure should not be limited by any of the above-described exemplary aspects, but should be defined only in accordance with the following claims and their equivalents.

## Claims

1. An apparatus configured to predict build line locations in a part before additively manufacturing the part, comprising:

   one or more memories; and
   one or more processors, coupled to the one or more memories, configured to cause the apparatus to:

      obtain a sliced three-dimensional model of the part for additive manufacturing, wherein the sliced three-dimensional model comprises a plurality of layers stacked in a build direction extending from a virtual build plate and each layer of the plurality of layers comprises a predefined height;
      generate, for each neighboring pair of layers in the plurality of layers, a face count difference, wherein the face count difference is a difference between a first face count of a first layer and a second face count of a previous layer, and the previous layer is closer to the virtual build plate than the first layer;

generate, for each of the neighboring pair of layers, a surface area difference, wherein the surface area difference is a difference between a first surface area of the first layer and a surface area of the previous layer;

predict, for each of the neighboring pair of layers, that the first layer from each of the neighboring pair of layers comprises a presence of a build line based on a determination that the face count difference is less than zero and the surface area difference is greater than zero to form a list of predicted build line layers comprising one or more layers predicted to comprise the presence of the build line;

store, in the one or more memories, the list of predicted build line layers comprising one or more layers predicted to comprise the presence of the build line; and

adjust at least one dimension of the part for additive manufacturing corresponding to a layer in the list of predicted build line layers.

2. The apparatus of claim 1, wherein the one or more processors are configured to further cause the apparatus to:

project an array of rays extending in a perpendicular direction from the virtual build plate upward to the sliced three-dimensional model;

identify, from the list of predicted build line layers, one or more layers first intersected by a ray in the array of rays; and

determine a location on the identified one or more layers where the ray in the array of rays intersects, wherein the location is defined by a three-dimensional coordinate position.

3. The apparatus of claim 2, wherein the one or more processors are configured to further cause the apparatus to:

determine, for each layer in the list of predicted build line layers, a portion of the respective layer having a minimum wall thickness; and

determine a thickness value for the portion with the minimum wall thickness.

4. The apparatus of claim 3, wherein the one or more processors are configured to further cause the apparatus to determine, for each layer in the list of predicted build line layers, a relative intensity based on a ratio of the surface area and the thickness value.

5. The apparatus of claim 1, wherein to obtain the sliced three-dimensional model comprises to:

receive a three-dimensional model of the part for additive manufacturing; and

slice the three-dimensional model into the plurality of layers along an additive manufacturing build direction.

6. The apparatus of claim 1, wherein the one or more processors are configured to further cause the apparatus to determine a face count for each layer of the plurality of layers, wherein the face count is a number of faces defined by a closed loop shape with the layer of the plurality of layers.

7. The apparatus of claim 1, wherein the list of predicted build line layers stored in the one or more memories is defined by a height value.

8. A method for predicting build line locations in a part before additively manufacturing the part, comprising:

obtaining a sliced three-dimensional model of the part for additive manufacturing, wherein the sliced three-dimensional model comprises a plurality of layers stacked in a build direction extending from a virtual build plate and each layer of the plurality of layers comprises a predefined height;

generating, for each neighboring pair of layers in the plurality of layers, a face count difference, wherein the face count difference is a difference between a first face count of a first layer and a second face count of a previous layer, and the previous layer is closer to the virtual build plate than the first layer;

generating, for each of the neighboring pair of layers, a surface area difference, wherein the surface area difference is a difference between a first surface area of the first layer and a surface area of the previous layer;

predicting, for each of the neighboring pair of layers, that the first layer from each of the neighboring pair of layers comprises a presence of a build line based on a determination that the face count difference is less than zero and the surface area difference is greater than zero to form a list of predicted build line layers comprising one or more layers predicted to comprise the presence of the build line;

storing, in one or more memories, the list of predicted build line layers comprising one or more layers predicted to comprise the presence of the build line; and

adjusting at least one dimension of the part for additive manufacturing corresponding to a layer in the list of predicted build line layers.

9. The method of claim 8, further comprising:

projecting an array of rays extending in a perpendicular direction from the virtual build plate upward to the sliced three-dimensional model;

identifying, from the list of predicted build line layers, one or more layers for which a ray in the array of rays first intersects the one or more layers; and

determining a location on the identified one or more layers where the ray in the array of rays intersects, wherein the location is defined by a three-dimensional coordinate position.

10. The method of claim 9, further comprising:

determining, for each layer in the list of predicted build line layers, a portion of the respective layer having a minimum wall thickness; and

determining a thickness value for the portion with the minimum wall thickness.

11. The method of claim 10, further comprising determining, for each layer in the list of predicted build line layers, a relative intensity based on a ratio of the surface area and the thickness value.

12. The method of claim 8, wherein obtaining the sliced three-dimensional model comprises:

receiving a three-dimensional model of the part for additive manufacturing; and

slicing the three-dimensional model into the plurality of layers along an additive manufacturing build direction.

13. The method of claim 8, further comprising determining a face count for each layer of the plurality of layers, wherein the face count is a number of faces defined by a closed loop shape with the layer of the plurality of layers.

14. The method of claim 8, wherein the list of predicted build line layers stored in the one or more memories is defined by a height value.

15. A computer program product comprising one or more memories storing instructions, that when executed by one or more processors, cause the one or more processors to perform a method comprising:

obtaining a sliced three-dimensional model of a part for additive manufacturing, wherein the sliced three-dimensional model comprises a plurality of layers stacked in a build direction extending from a virtual build plate and each layer of the plurality of layers comprises a predefined height;

generating, for each neighboring pair of layers in the plurality of layers, a face count difference, wherein the face count difference is a difference between a first face count of a first layer and a second face count of a previous layer, and the previous layer is closer to the virtual build plate than the first layer;

generating, for each of the neighboring pair of layers, a surface area difference, wherein the surface area difference is a difference between a first surface area of the first layer and a surface area of the previous layer;

predicting, for each of the neighboring pair of layers, that the first layer from each of the neighboring pair of layers comprises a presence of a build line based on a determination that the face count difference is less than zero and the surface area difference is greater than zero to form a list of predicted build line layers comprising one or more layers predicted to comprise the presence of the build line;

storing, in one or more memories, the list of predicted build line layers comprising one or more layers predicted to comprise the presence of the build line; and

adjusting at least one dimension of the part for additive manufacturing corresponding to a layer in the list of predicted build line layers.

FIG.1

FIG. 2

EP 4 645 148 A1

FIG. 3

EP 4 645 148 A1

FIG. 4

FIG. 5

600

A METHOD FOR PREDICTING BUILD LINE LOCATIONS IN A PART FOR AM

OBTAIN A SLICED THREE-DIMENSIONAL MODEL OF A PART FOR ADDITIVE MANUFACTURING, WHEREIN THE SLICED THREE-DIMENSIONAL MODEL COMPRISES A PLURALITY OF LAYERS STACKED IN A BUILD DIRECTION EXTENDING FROM A VIRTUAL BUILD PLATE AND EACH LAYER OF THE PLURALITY OF LAYERS COMPRISES A PREDEFINED HEIGHT — 602

GENERATE, FOR EACH NEIGHBORING PAIR OF LAYERS IN THE PLURALITY OF LAYERS, A FACE COUNT DIFFERENCE, WHEREIN THE FACE COUNT DIFFERENCE IS A DIFFERENCE BETWEEN A FIRST FACE COUNT OF A FIRST LAYER AND A SECOND FACE COUNT OF A PREVIOUS LAYER, AND THE PREVIOUS LAYER IS CLOSER TO THE VIRTUAL BUILD PLATE THAN THE FIRST LAYER — 604

GENERATE, FOR EACH OF THE NEIGHBORING PAIR OF LAYERS, A SURFACE AREA DIFFERENCE, WHEREIN THE SURFACE AREA DIFFERENCE IS A DIFFERENCE BETWEEN A FIRST SURFACE AREA OF THE FIRST LAYER AND A SURFACE AREA OF THE PREVIOUS LAYER — 606

PREDICT, FOR EACH OF THE NEIGHBORING PAIR OF LAYERS, THAT THE FIRST LAYER FROM EACH OF THE NEIGHBORING PAIR OF LAYERS COMPRISES A PRESENCE OF A BUILD LINE BASED ON A DETERMINATION THAT THE FACE COUNT DIFFERENCE IS LESS THAN ZERO AND THE SURFACE AREA DIFFERENCE IS GREATER THAN ZERO — 608

PROJECT AN ARRAY OF RAYS EXTENDING IN A PERPENDICULAR DIRECTION FROM THE VIRTUAL BUILD PLATE UPWARD TO THE SLICED THREE-DIMENSIONAL MODEL — 610

IDENTIFY, FROM THE LIST OF PREDICTED BUILD LINE LAYERS, ONE OR MORE LAYERS THAT A RAY IN THE ARRAY OF RAYS FIRST INTERSECTS THE ONE OR MORE LAYERS — 612

DETERMINE A LOCATION ON THE IDENTIFIED ONE OR MORE LAYERS WHERE THE RAY IN THE ARRAY OF RAYS INTERSECTS, WHEREIN THE LOCATION IS DEFINED BY A THREE-DIMENSIONAL COORDINATE POSITION — 614

STORE, IN THE ONE OR MORE MEMORIES, A LIST OF PREDICTED BUILD LINE LAYERS COMPRISING THE ONE OR MORE LAYERS PREDICTED TO COMPRISE THE PRESENCE OF THE BUILD LINE — 616

ADJUST AT LEAST ONE DIMENSION OF THE PART FOR ADDITIVE MANUFACTURING CORRESPONDING TO A LAYER IN THE LIST OF PREDICTED BUILD LINE LAYERS — 618

FIG. 6

700

AMM 160

702    704    706

PROCESSOR(S)    NETWORK INTERFACE(S)    INPUT(S) / OUTPUT(S)

710

MEMORY

OBTAIN COMPONENT 721    GENERATE FACE COUNT COMPONENT 722

GENERATE SURFACE AREA COMPONENT 723    PREDICTION COMPONENT 724

PROJECTION COMPONENT 725    IDENTIFICATION COMPONENT 726

DETERMINE COMPONENT 727    STORE COMPONENT 728

ADJUST COMPONENT 729

3D MODEL DATA 740    SLICED MODEL DATA 741

FACE COUNT DATA 742    SURFACE AREA DATA 743

BUILD LINE PREDICTION DATA 744    BUILD LINE LOCATION DATA 745

RELATIVE INTENSITY DATA 746    LAYER DATA 747

FIG. 7

Europäisches
Patentamt

European
Patent Office

Office européen
des brevets

# EUROPEAN SEARCH REPORT

**Application Number**

EP 25 17 0675

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Mininni Marco: "Design for additive manufacturing: distortions correction and build improvements",<br><br>15 July 2022 (2022-07-15), XP093308762,<br>Retrieved from the Internet:<br>URL:https://webthesis.biblio.polito.it/secure/23463/1/tesi.pdf<br>* abstract *<br>* page 36, paragraph 2 *<br>* page 38, paragraph 2-3 *<br>* figures 25-26 *<br>* chapter 4 *<br>* sections 3.1.2 and 3.1.3 *<br>* page 31, paragraph 2; figures 19-20 *<br>* the whole document *<br>----- | 1-15 | INV.<br>G06F30/10<br>B22F10/80<br>B22F10/85<br>B29C64/386<br>B33Y50/00<br>B33Y50/02<br>G06F30/20<br>G06T19/20<br><br>ADD.<br>G06F113/10<br>G06F119/18 |

**TECHNICAL FIELDS SEARCHED (IPC)**

G06F
G06T
B33Y
B29C
C22C
B22F

The present search report has been drawn up for all claims

| Place of search | Date of completion of the search | Examiner |
|---|---|---|
| Munich | 28 August 2025 | Dapp, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)